# EUROPEAN PATENT APPLICATION

(11) **EP 4 726 222 A1**
(43) Date of publication of application: **15.04.2026**
(21) Application number: 24205830.3
(22) Date of filing: 10.10.2024
(51) Int. Cl.: F16B 13/06

(54) **EXPANSION ANCHOR WITH DENTED SHEAR SUPPORT SLEEVE**

(71) Applicant: Hilti Aktiengesellschaft, 9494 Schaan (LI)
(72) Inventor: Winkler, Marcel, 6800 Feldkirch (AT); Spampatti, Matteo, 9470 Buchs (CH); Marder, Johannes Alfred, 6800 Feldkirch (AT); Schaeffer, Marc, 8852 Altendorf (CH)
(74) Representative: Hilti Aktiengesellschaft Corporate Intellectual Property

(57) **Abstract**

Expansion anchor having an anchor bolt having a threaded zone and an expansion sleeve surrounding the anchor bolt. The anchor bolt has an expansion body located in a front region of the anchor bolt. The expansion body has a converging zone for expanding the expansion sleeve. The anchor bolt has a flange that provides an abutment for the expansion sleeve. The flange is arranged between the expansion body and the threaded zone. The anchor bolt has a neck that is arranged between the expansion body and the flange, and which adjoins both the expansion body and the flange, wherein the expansion sleeve surrounds the neck. A shear support sleeve is provided, which surrounds the threaded zone at least in regions of the threaded zone. The shear support sleeve has at least one radially protruding dent for providing axial support of the shear support sleeve on a substrate.

## Description

The invention relates to an expansion anchor according to the preamble of claim 1.

DE9410844 U1 discloses an expansion anchor which is additionally shear-supported by a flanged sleeve. The expansion anchor is installed in a stepped bore, wherein the flanged sleeve is arranged in the larger-diameter zone of the stepped bore.

Another expansion anchor with a shear support sleeve is described in European patent application EP24192822.5.

It is an object of the invention to provide an expansion anchor which provides particularly good performance at low manufacturing and/or installation effort.

This object is achieved by an expansion anchor according to claim 1. Dependent claims refer to preferred embodiments of the invention.

Accordingly, there is provided an expansion anchor having
- an anchor bolt having a threaded zone for introducing tensile load into the anchor bolt, and
- an expansion sleeve surrounding the anchor bolt,
- wherein the anchor bolt has an expansion body located in a front region of the anchor bolt, wherein the expansion body has a converging zone for expanding the expansion sleeve,
- wherein the anchor bolt further has a flange that provides an abutment for the expansion sleeve, wherein the flange is arranged between the expansion body and the threaded zone,
- wherein the anchor bolt further has a neck that is arranged between the expansion body and the flange, and which adjoins both the expansion body and the flange, wherein the expansion sleeve surrounds the neck of the anchor bolt, and
- wherein a shear support sleeve is provided, which surrounds the threaded zone at least in regions of the threaded zone,
characterized in that
- the shear support sleeve has at least one radially protruding dent for providing axial support of the shear support sleeve on a substrate.

The expansion anchor thus comprises a shear support sleeve, which surrounds the threaded zone at least in regions of the threaded zone. This shear support sleeve is intended to take up shear loads arising at the mouth of a borehole of the substrate in which the anchor bolt is arranged, thereby providing relief for the anchor bolt.

According to the invention, at least one dent is provided on the shear support sleeve, which projects radially over the remainder of the shear support sleeve. The at least one dent projects on the outer surface of the shear support sleeve. The at least one dent provides axial support of the shear support sleeve on the substrate in which the anchor is installed. In particular, the at least one dent can be configured to abut against the surface of the substrate. The dent can thus provide a self-positioning mechanism for positioning the shear support sleeve with respect to the shear zone present at the substrate. In particular, the at least one dent that radial extends on the outer surface of the shear support sleeve can provide axial support of the shear support sleeve on the substrate top surface. Accordingly, particularly good performance can be achieved at particularly low manufacturing and/or installation effort.

The described solution utilizes the top surface of the substrate to secure the shear support sleeve in position. A key element is the axial alignment of the shear support sleeve by the radial outwardly protruding dent relative to the substrate top surface. The dent can secure the position of the shear support sleeve during installation and/or during alternating load cycles (e.g. in seismic load situations).

The axial position of the at least one dent can be defined towards its centre symmetry plane by a value which is specified towards the top end of the shear support sleeve according to the attachment part height (e.g. dent position 10mm from top end when the attachment part height is 10mm). In particular, the substrate can be a concrete substrate.

Throughout this document - wherever the terms "axially", "longitudinally", "radially", "cross section", and "circumferentially" are used, they should refer, in particular, to the longitudinal axis of the anchor bolt, unless indicated otherwise. The longitudinal axis of the anchor bolt extends through the threaded zone, through the expansion body and through the flange.

The expansion anchor is of the stud-type (i.e. it is provided with expansion sleeve abutment on the anchor bolt).

Preferably, the shear support sleeve consists of metal, more preferably of steel, which can also be coated. This can provide particularly good performance at particularly low effort. Alternatively, the shear support sleeve could consist of a polymer material.

It is particularly preferred that at the at least one dent, the shear support sleeve has an outer diameter d₅₀ which is 0.4 to 2.0 mm greater, more preferably 0.8 to 1.0 mm greater, than the outer diameter d₄₀ of the shear support sleeve at a location distant from the at least one dent. The respective diameters are in particular measured perpendicularly to the longitudinal axis of the anchor bolt, and/or the respective diameters in particular intersect the longitudinal axis of the anchor bolt. A diameter increase of 0.4 to 2.0 mm, inclusive, more preferably 0.8 mm to 1.0 mm, inclusive, can provide particularly good performance whilst being easy to manufacture.

According to another preferred embodiment of the invention, at the at least one dent, the shear support sleeve has an outer diameter d₅₀ which is 1.0 to 1.2 times (inclusive) the outer diameter d₁₇ of the flange, more preferably 1.1 to 1.2 times (inclusive) the outer diameter d₁₇ of the flange. Again, the respective diameters are in particular measured perpendicularly to the longitudinal axis of the anchor bolt, and/or the respective diameters in particular intersect the longitudinal axis of the anchor bolt. Accordingly, the dent has slightly (100-120%, more preferably 110-120%) greater diameter than the flange. This provides for particularly easy installation and good performance.

Preferably, the at least one dent has an axial height h₅₀ of at least 1mm, in particular of 2-3 mm (inclusive). In particular, the axial height is measured parallel to the longitudinal axis of the anchor bolt. This can further improve the performance.

Preferably, the shear support sleeve has generally constant wall thickness, more preferably generally constant wall thickness of 1.0-2.2 mm (inclusive), in particular of 1.2-1.6 mm (inclusive), which might be advantageous in view of manufacturing and performance.

The shear support sleeve can e.g. be obtained by bending a metal sheet, which allows a particularly easy manufacturing process. In particular, the shear support sleeve can have an axially extending slit, e.g. with a width of 0.2-2.0 mm, inclusive. The slit may allow closing of the shear support sleeve around the anchor bolt while installing the anchor in the substrate, thus providing particularly efficient installation in varying conditions.

The at least one dent can preferentially be a ring, in particular an open ring, wherein the longitudinal axis of the anchor preferably extends through the centre of the ring. A ring-shaped dent can provide particularly reproducible performance.

When the at least one dent is an open ring, it is preferred that the axially extending slit passes through the opening of the ring. This can be advantageous in view of manufacturing and performance.

The invention also relates to a system comprising an expansion anchor as described here, a substrate, in particular a concrete substrate, and an attachment part, in particular a baseplate, attached to the substrate by means of the anchor, wherein the at least one dent rests on the substrate. The shear support sleeve extends both within the attachment part and within the substrate, so as to be able to absorb shear between these two items.

The invention is explained in greater detail below with reference to preferred exemplary embodiments, which are depicted schematically in the accompanying drawings. Individual features of the exemplary embodiments presented below can be implemented either individually or in any combination within the scope of the present invention.

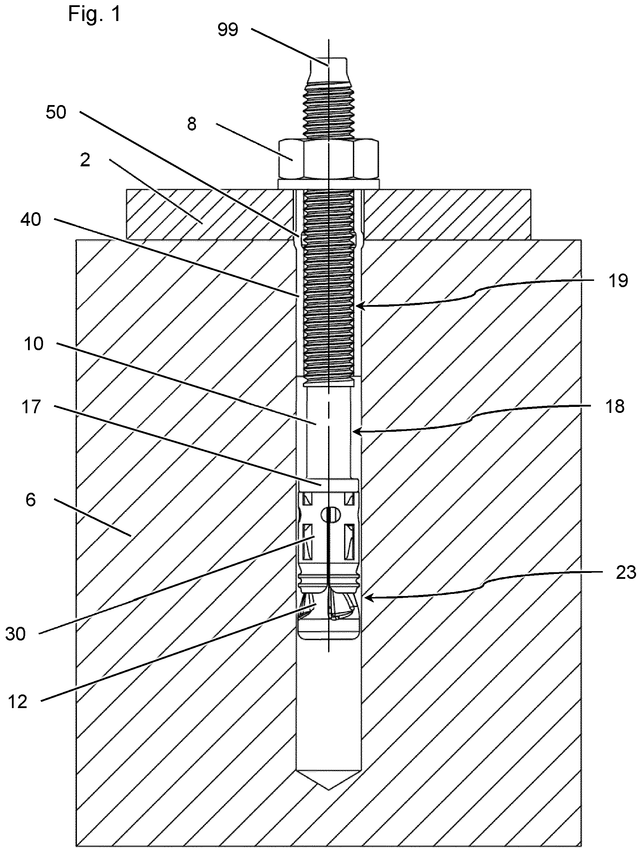

Figure 1 is a partly sectional side view (only the shear support sleeve, the substrate and the attachment part being sectional) of an expansion anchor embedded in a concrete substrate;

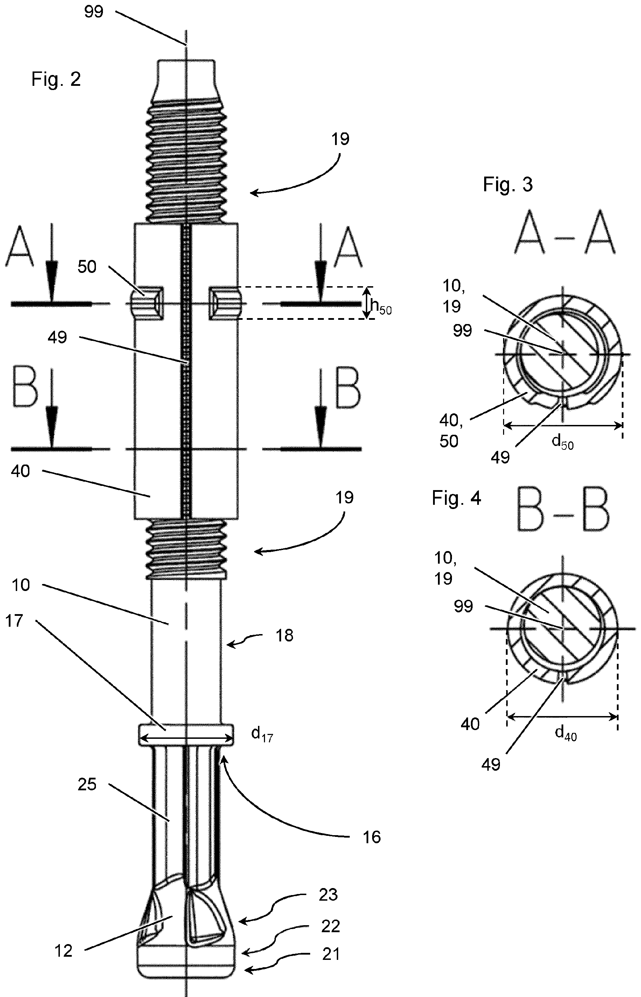

Figure 2 is a side view of the expansion anchor of figure 1, with the expansion sleeve omitted;
Figure 3 is a cross-sectional view A-A, according to figure 2, of the expansion anchor of figure 1, with the expansion sleeve omitted;
Figure 4 is a cross-sectional view B-B, according to figure 2, of the expansion anchor of figure 1, with the expansion sleeve omitted;

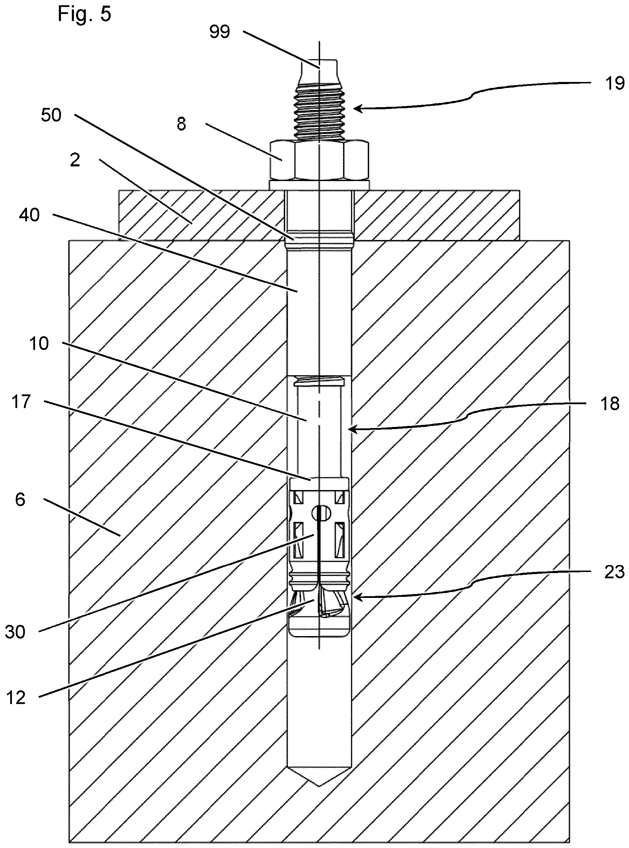

Figure 5 is another partly sectional side view (this time, only the substrate and the attachment part being sectional) of the expansion anchor of figure 1 embedded in the concrete substrate.

The figures illustrate an embodiment of an expansion anchor. The expansion anchor comprises an elongate anchor bolt 10 that defines a longitudinal axis 99, wherein the longitudinal axis extends through a leading front end of the anchor bolt 10, which is intended to be inserted first into a borehole, and through a trailing rear end of the anchor bolt. The expansion anchor furthermore comprises an expansion sleeve 30 encompassing the anchor bolt 10.

The anchor bolt 10 comprises an expansion body 12 designated for radially expanding the expansion sleeve 30. The expansion body 12 is situated proximate to the front end of the anchor bolt 10. In the current embodiment, the expansion body 12 and the remainder of the anchor bolt 10 are integrally formed, exhibiting a monolithic structure.

The expansion body 12 has a converging zone 23 designed for radially expanding the expansion sleeve 30 when the expansion body 12 is drawn into the expansion sleeve 30 in the rearward direction. For this purpose, the lateral surface of the expansion body 12 converges in the converging zone 23 towards the rear end of the anchor bolt 10. In the present example, the expansion body 12 lateral surface has generally conical envelope in the converging zone 23, with a focus of convergence on the longitudinal axis 99. However, this is merely an example, and other converging designs are also possible. In the present embodiment, recesses are provided in the expansion body 12 within the converging zone 23, which might interact with the expansion sleeve 30 so as to modulate the expansion path of the expansion sleeve 30.

In this example, the expansion body 12 is designed with a transition zone 22 and a tip zone 21. The transition zone 22 is located forward of and adjacent to the converging zone 23, while the tip zone 21 is located forward of and adjacent to the transition zone 22. In the transition zone 22, the rearward convergence is less pronounced compared to the converging zone 23, or it may even be zero. However, it is preferably not reversed, meaning it does not converge forward. In this specific example, there is no convergence (i.e. it is zero) in the transition zone 22. The expansion body 12 features a cylindrical lateral surface in the converging zone 23, specifically a cylinder with a circular base. In the tip zone 21, the lateral surface of the expansion body 12 converges towards the front end of the anchor.

The anchor bolt 10 has a neck 25, which is located adjacent to and rearwards of the expansion body 12. The expansion sleeve 30 at least partly surrounds this neck 25, at least before installation the anchor. At the neck 25, the cross-sectional area of the anchor bolt 10 can be minimal. In particular, the neck 25 has generally cylindrical shape. The cylinder base could be circular. However, in the present embodiment, a plurality of longitudinal grooves is provided within the neck 25, with the grooves extending parallel to the longitudinal axis 99. Accordingly, the cylinder base is non-circular in the present embodiment. The expansion sleeve 30 engages in the longitudinal grooves. For this purpose, the expansion sleeve 30 has axially extending ribs, which project into the respective longitudinal grooves. This engagement forms a rotational lock, which prevents rotating of the expansion sleeve 30 around the anchor bolt 10.

The anchor is of the stud type. Accordingly, the anchor bolt 10 has, adjoining the neck 25 at the rearward end of the neck 25, a shoulder 16 that faces forwards, i.e. which faces the expansion body 12, wherein the shoulder 16 provides a rearward axial abutment for the expansion sleeve 30 for advancing the expansion sleeve 30 forwards into a borehole when the anchor is inserted into the borehole. In particular, the anchor bolt comprises a flange 17 that projects from the anchor bolt 10, wherein the shoulder 16 is provided on the flange 17. Accordingly, the flange 17 provides an axial abutment for the expansion sleeve 30 for advancing the expansion sleeve 30 forwards into the borehole when the anchor is inserted into the borehole. The flange 17 has generally circular outline. It adjoins the neck 25 at the rearward end of the neck 25. Preferably, the flange 17 and the remainder of the anchor bolt 10 are integrally formed, exhibiting a monolithic structure.

In a rear region of the anchor bolt 10, the anchor bolt 10 is provided with a threaded zone 19, in which the anchor bolt is provided with an outer thread. The threaded zone 19 provides a tension-introducing structure for introducing rearwardly-directed tension into the anchor bolt 10.

Located in-between the threaded zone 19 and the flange 17, the anchor bolt 10 might have an unthreaded zone 18. The unthreaded zone 18 is generally cylindrical, in the present embodiment with cylindrical base.

The anchor bolt 10 consists of a metal material, preferably of steel, which might optionally be coated. The expansion sleeve 30 consists of a metal material, preferably of steel, which might optionally be coated.

The anchor further comprises a shear support sleeve 40, which surrounds the anchor bolt 10, at least in threaded zone 19. The shear support sleeve 40 is so positioned that it bridges the mouth of the borehole when the anchor is installed in the borehole as intended. In particular, when the anchor is installed as intended, the shear support sleeve 40 extends both within an attachment part 2 attached by means of the anchor and within the substrate 6 in which the anchor is anchored. Accordingly, the shear support sleeve 40 is able to transfer shear loads, i.e. loads directed perpendicular to the longitudinal axis 99 of the anchor bolt 10, from the attachment part 2 into the substrate 6. The shear support sleeve 40 is designed as a smooth sleeve with a consistent wall thickness, and can in particularly be obtained by stamping and bending a metal sheet.

Axial positioning of the shear support sleeve 40 with respect to the substrate 6 is achieved by an open-ring-shaped dent 50, which protrudes radially on the outside of the shear support sleeve 40, and which provides an abutment on the substrate 6. The axial centre position of the dent 50 is chosen so as to correspond to the height of the attachment part 2 (i.e. the height of the baseplate).

At the dent 50, the shear support sleeve 40 has an outer diameter d₅₀, which can e.g. be 13.4-13.8 mm (inclusive). At locations distant from the dent 50, the shear support sleeve 40 has generally constant diameter d₄₀. Preferably, d₅₀ is 0.4-0,5 mm (inclusive) greater than d₄₀.

The shear support sleeve 40 has an axially extending slit 49, which stems from its manufacture by means of a bending process. The axially extending slit 49 passes through the opening of the ring of the open-ring-shaped dent 50. The axially extending slit 49 extends, axially, along the entire shear support sleeve 40.

The shear support sleeve 40 consists of a metal material, preferably of steel, which might optionally be coated. The substrate 6 is in particular a concrete substrate. The expansion sleeve 30 and the expansion body 12 are arranged within the substrate when the anchor is installed as intended. The attachment part 2 could be e.g. a metal part, e.g. the base of a column or the base of a strut.

When the anchor is installed, the anchor bolt 10 is introduced, front end first, into a borehole in the substrate 6 and driven into the borehole, in particular by means of hammer blows. During this process, the shear support sleeve 40 is synchronously driven into the borehole, since a nut 8 provided on the threaded zone 19 of the anchor bolt 10 abuts (directly or indirectly, e.g. via a washer) against the shear support sleeve 40, and this axial abutment transfers the hammer blows onto the shear support sleeve 40. The shear support sleeve 40 is driven into the borehole until the dent 50 reaches the top surface of the substrate 6.

Following installation, the expansion body 12 is drawn into the front-end region of the expansion sleeve 30. In the present embodiment, this is achieved by pulling the anchor bolt 10 together with the expansion body 12 rearwardly, in particular by tightening the nut 8.

## Claims

1. Expansion anchor having
- an anchor bolt (10) having a threaded zone (19) for introducing tensile load into the anchor bolt (10), and
- an expansion sleeve (30) surrounding the anchor bolt (10),
- wherein the anchor bolt (10) has an expansion body (12) located in a front region of the anchor bolt (10), wherein the expansion body (12) has a converging zone (23) for expanding the expansion sleeve (30),
- wherein the anchor bolt (10) further has a flange (17) that provides an abutment for the expansion sleeve (30), wherein the flange (17) is arranged between the expansion body (12) and the threaded zone (19),
- wherein the anchor bolt (10) further has a neck (25) that is arranged between the expansion body (12) and the flange (17), and which adjoins both the expansion body (12) and the flange (17), wherein the expansion sleeve (30) surrounds the neck (25) of the anchor bolt (10), and
- wherein a shear support sleeve (40) is provided, which surrounds the threaded zone (19) at least in regions of the threaded zone (19),
**characterized in that**
- the shear support sleeve (40) has at least one radially protruding dent (50) for providing axial support of the shear support sleeve (40) on a substrate (6).

2. Expansion anchor according to claim 1,
**characterized in that**
at the at least one dent (50), the shear support sleeve (40) has an outer diameter (d₅₀) which is 0.4 to 2.0 mm greater than the outer diameter (d₄₀) of the shear support sleeve (40) at a location distant from the dent (50).

3. Expansion anchor according to any of the proceeding claims,
**characterized in that**
at the at least one dent (50), the shear support sleeve (40) has an outer diameter (d₅₀) which is 1.0 to 1.2 times the outer diameter (d₁₇) of the flange (17).

4. Expansion anchor according to any of the proceeding claims,
**characterized in that**
the at least one dent (50) has an axial height (hso) of at least 1 mm.

5. Expansion anchor according to any of the proceeding claims,
**characterized in that**
the shear support sleeve (40) has generally constant wall thickness of 1.0-2.2 mm.

6. Expansion anchor according to any of the proceeding claims,
**characterized in that**
the shear support sleeve (40) has an axially extending slit (49).

7. Expansion anchor according to claim 6,
**characterized in that**
the at least one dent (50) is an open ring, wherein the axially extending slit (49) passes through the opening of the ring.

8. System comprising an expansion anchor according any of the proceeding claims, a substrate (6) and an attachment part (2), in particular a baseplate, attached to the substrate (6) by means of the anchor, wherein the at least one dent (50) rests on the substrate (6).
